# EUROPÄISCHE PATENTSCHRIFT

(11) **EP 3 659 198 B1**
(45) Veröffentlichungstag und Bekanntmachung des Hinweises auf die Patenterteilung: **23.08.2023**
(21) Anmeldenummer: 18753061.3
(22) Anmeldetag: 13.07.2018
(51) Int. Cl.: H01M 8/10, H01M 8/0273, H01M 8/0276

(54) **ELEKTROCHEMISCH AKTIVE EINHEIT FÜR EINE ELEKTROCHEMISCHE VORRICHTUNG**
ELECTROCHEMICALLY ACTIVE UNIT FOR AN ELECTROCHEMICAL DEVICE
UNITÉ ÉLECTROCHIMIQUEMENT ACTIVE POUR DISPOSITIF ÉLECTROCHIMIQUE

(30) Priorität: 28.07.2017 DE 102017117146
(43) Veröffentlichungstag der Anmeldung: 03.06.2020
(73) Patentinhaber: EKPO Fuel Cell Technologies GmbH, 72581 Dettingen (DE)
(72) Erfinder: STAHL, Peter, 72555 Metzingen (DE); KRAFT, Jürgen, 72555 Metzingen (DE); DAHL, Karsten, 73277 Owen (DE); FINK, Oliver, 72555 Metzingen (DE); GRÖH, Alexander, 72072 Tübingen (DE)
(74) Vertreter: Hoeger, Stellrecht & Partner Patentanwälte mbB
(86) Internationale Anmeldenummer: PCT/EP2018/069107
(87) Internationale Veröffentlichungsnummer: WO 2019/020402

(56) Entgegenhaltungen:
- DE-A1-102012 023 472
- DE-A1-102014 104 017
- US-A1- 2005 271 926
- US-A1- 2007 202 381
- US-A1- 2008 309 027

## Beschreibung

Die vorliegende Erfindung betrifft eine elektrochemisch aktive Einheit für eine elektrochemische Vorrichtung, wobei die elektrochemisch aktive Einheit eine Membran-Elektroden-Anordnung, mindestens eine Gasdiffusionslage und eine Dichtung, die an mindestens eine der mindestens einen Gasdiffusionslage angebunden ist, umfasst.

Eine solche elektrochemisch aktive Einheit kann zusammen mit jeweils einer Bipolarplatte eine elektrochemische Zelle der elektrochemischen Vorrichtung bilden, welche beispielsweise als ein Brennstoffzellenstapel oder als ein Elektrolyseur ausgebildet ist.

Die elektrochemische Vorrichtung umfasst vorzugsweise mehrere in einer Stapelrichtung übereinander angeordnete elektrochemische Zellen sowie vorzugsweise zwei Endplatten, zwischen denen der Stapel von elektrochemischen Zellen angeordnet ist und welche mittels einer Spannvorrichtung gegeneinander verspannbar sind, um die dazwischen angeordneten elektrochemischen Zellen und insbesondere deren elektrochemisch aktive Einheiten mit einer längs der Stapelrichtung gerichteten Spannkraft zu beaufschlagen.

In Brennstoffzellenstapeln und in Elektrolyseuren werden in verschiedenen Ebenen einer elektrochemischen Zelle und, je nach Design, auch in verschiedenen Bereichen derselben Ebene unterschiedliche Medien geführt. Diese Medien können insbesondere ein anodisches Fluid (Brenngas), ein kathodisches Fluid (Oxidationsmittel) und gegebenenfalls auch ein fluides Kühlmittel sein.

Die der elektrochemischen Vorrichtung zuzuführenden Medien (kathodisches Fluid, anodisches Fluid, Kühlmittel) werden mittels einer Medienverteilungsstruktur (auch als "Manifold" bezeichnet) mit Medium-Zuführkanälen und Medium-Abführkanälen, welche sich in der Stapelrichtung der elektrochemischen Vorrichtung erstrecken, den verschiedenen Ebenen der elektrochemischen Vorrichtung zugeführt oder aus den verschiedenen Ebenen der elektrochemischen Vorrichtung abgeführt und müssen jeweils aus einem Medium-Zuführkanal dem Strömungsfeld (Flow Field) des betreffenden Mediums in einer elektrochemischen Zelle zugeführt und aus dem Strömungsfeld wieder in einen Medium-Abführkanal abgeführt werden. Dabei müssen sowohl die Medium-Zuführkanäle und Medium-Abführkanäle als auch die Strömungsfelder abgedichtet werden, um sowohl Leckagen in den Außenraum der elektrochemischen Vorrichtung als auch zwischen den Räumen, welche von den verschiedenen Medien durchströmt werden, zu verhindern.

Die durch die elektrochemische Vorrichtung geführten Medien dürfen sich weder miteinander vermischen noch aus den elektrochemischen Zellen austreten, weshalb in mehreren Ebenen Dichtungen erforderlich sind.

Diese Dichtungen können beispielsweise auf der Basis von Elastomermaterialien und/oder Klebungen realisiert werden.

In elektrochemischen Zellen mit metallischen Bipolarplatten können die Dichtungen vollständig oder teilweise durch Sicken in der Bipolarplatte oder durch Dichtungen auf der Basis von Elastomermaterialien verwirklicht sein.

Die Bipolarplatten (auch Separatoren oder Interkonnektoren genannt) können einteilig ausgebildet sein oder mindestens zwei Einzellagen (Bipolarplattenlagen) umfassen.

Die Bipolarplattenlagen einer mehrlagigen Bipolarplatte können durch Fügeverfahren wie Schweißen oder Kleben miteinander verbunden werden.

Eine Dichtung kann als separate Komponente in den Stapel aus elektrochemischen Zellen eingelegt oder an einer Bipolarplatte oder an einem anderen Bestandteil einer elektrochemischen Zelle, beispielsweise an einer Gasdiffusionslage oder an einer Membran-Elektroden-Anordnung, festgelegt sein.

Wegen Vorteilen in der Handhabung und in der Herstellung und wegen der einfachen Dichtungsausführung wird häufig die Festlegung der Dichtung an einer Bipolarplatte bevorzugt. Dies kann beispielsweise durch Anspritzen einer Dichtung, insbesondere aus einem Elastomermaterial, an eine Lage der Bipolarplatte erfolgen.

In dieser Dichtungskonfiguration hat sich die Kombination der an der Bipolarplatte festgelegten Dichtung mit einer im Randbereich der Membran-Elektroden-Anordnung an der Membran-Elektroden-Anordnung (insbesondere an einer katalysatorbeschichteten Membran, CCM) festgelegten Randverstärkungsanordnung als vorteilhaft erwiesen, wobei die Randverstärkungsanordnung als Gegenkomponente für die Dichtung dient, eine nachteilige mechanische Belastung der Membran-Elektroden-Anordnung verhindern hilft und zugleich eine vorteilhafte Anbindung des elektrochemisch aktiven Bereiches der Membran-Elektroden-Anordnung an den Randbereich der Membran-Elektroden-Anordnung sicherstellt.

Eine solche Randverstärkungsanordnung ist beispielsweise in der EP 1 403 949 B1 offenbart.

Eine solche Randverstärkungsanordnung wird auch als Sub-Gasket bezeichnet.

Eine solche Randverstärkungsanordnung kann eine oder mehrere Lagen umfassen, wobei ein üblicher Aufbau zwei Lagen umfasst, die auf zwei einander gegenüberliegenden Seiten der Membran-Elektroden-Anordnung in Form eines umlaufenden Rahmens angeordnet sind.

Die Herstellung und der Einbau einer Randverstärkungsanordnung sind allerdings aufwändig und kostenintensiv. Außerdem wird für die Überlappung zwischen der Randverstärkungsanordnung und der Membran-Elektroden-Anordnung zusätzlicher Bauraum benötigt, wodurch die volumetrische Leistungsdichte der elektrochemischen Vorrichtung sinkt.

Auf den Einsatz einer Randverstärkungsanordnung kann verzichtet werden, wenn die Dichtung direkt an eine Gasdiffusionslage angebunden wird, da so ein fließender Übergang zwischen der Dichtung und der Gasdiffusionslage geschaffen wird.

Eine zwischen zwei Dichtung-Gasdiffusionslage-Einheiten verpresste Membran-Elektroden-Anordnung erfährt keine übermäßigen Spannungsspitzen.

Ein Zellaufbau mit Dichtung-Gasdiffusionslage-Einheiten kann im Vergleich zu einer Dichtungslösung mit einer Randverstärkungsanordnung sehr kompakt aufgebaut werden, da kein zusätzlicher Platz für die Überlappung zwischen der Randverstärkungsanordnung und der Membran-Elektroden-Anordnung vorgesehen werden muss.

Die Anbindung einer Dichtung an eine Gasdiffusionslage kann beispielsweise in einem Spritzgießprozess erfolgen. Dabei wird eine Gasdiffusionslage in ein (vorzugsweise mehrteiliges) Spritzgießwerkzeug eingelegt und an ihrem äußeren Umfang mit einem Dichtungsmaterial umspritzt.

Hierbei entsteht ein Durchdringungsbereich am Übergang zwischen der Gasdiffusionslage und dem Dichtungsmaterial, in welchem das Dichtungsmaterial einen Teil der porösen Gasdiffusionslage durchdringt.

Dieser Durchdringungsbereich schafft eine stoffschlüssige und/oder formschlüssige Verbindung zwischen der Gasdiffusionslage und der Dichtung, so dass die Gasdiffusionslage und die Dichtung während der nachfolgenden Montageschritte und während des Betriebs der elektrochemischen Vorrichtung mechanisch ausreichend gut miteinander verbunden sind.

Im Durchdringungsbereich sind die Poren der Gasdiffusionslage mit Dichtungsmaterial verfüllt, so dass in diesem Bereich der Transport eines kathodischen Fluids oder eines anodischen Fluids zum aktiven Bereich der elektrochemisch aktiven Einheit erschwert wird. Der Durchdringungsbereich soll daher einen möglichst geringen Teil der Gasdiffusionslage umfassen, dabei jedoch ausreichend groß sein, um eine stabile mechanische Anbindung zwischen der Gasdiffusionslage und der Dichtung zu gewährleisten.

Um den Durchdringungsbereich auf der Gasdiffusionslagenseite zu begrenzen, wird die Gasdiffusionslage, die in ihrer Dickenrichtung (parallel zur Stapelrichtung der elektrochemischen Vorrichtung) mechanisch kompressibel ist, im Spritzgießwerkzeug lokal mittels einer Abdrückkante verpresst. Hierdurch steigt der Kapillardruck in den Poren der Gasdiffusionslage lokal an, und die Durchdringung der Gasdiffusionslage mit dem Dichtungsmaterial wird in den zur Dickenrichtung (z-Richtung) senkrechten x- und γ-Richtungen begrenzt.

Die Abdrückkante muss die Gasdiffusionslage mit einem Mindestdruck verpressen, um die Durchdringung der Gasdiffusionslage mit dem Dichtungsmaterial zu begrenzen. Allerdings darf die lokale Verpressung der Gasdiffusionslage durch die Abdrückkante auch nicht zu hoch sein, da die Gasdiffusionslage bei übermäßiger Verpressung beschädigt werden kann, beispielsweise durch Faserbruch.

Das Maß der Durchdringung der Gasdiffusionslage mit dem Dichtungsmaterial ist abhängig vom lokal, im jeweiligen Bereich der Gasdiffusionslage, anliegenden Druck der Dichtungsmasse im Spritzgießwerkzeug. Außerdem hängt der Grad der Durchdringung der Gasdiffusionslage mit dem Dichtungsmaterial von der Viskosität des Dichtungsmaterials, von der Temperatur des Spritzgießwerkzeugs (welche unter anderem die Viskosität des Dichtungsmaterials beeinflusst) und von den Eigenschaften der Gasdiffusionslage im Bereich der Abdrückkante und im restlichen Bereich der Gasdiffusionslage ab, insbesondere von der Porosität, von der Tortuosität (das heißt vom Grad der Gewundenheit der Transportwege innerhalb der Gasdiffusionslage), vom Kapillardruck und von der Hydrophobierung.

Bei der Anbindung einer Dichtung an eine Gasdiffusionslage in einem Spritzgießprozess oder einem ähnlichen Verfahren wird Dichtungsmaterial an einem Einspritzpunkt oder an mehreren Einspritzpunkten in die Kavität des Spritzgießwerkzeugs eingeleitet und breitet sich dann entlang von Fließwegen unter Ausbildung einer Fließfront in der Kavität aus.

Während des Einspritzvorganges bildet sich über den Fließweg hinweg ein Druckgradient aus. An der Einspritzstelle ist der höchste Druck in der Kavität zu erwarten; mit wachsender Entfernung von der Einspritzstelle nimmt der Druck ab.

Da bei einer Dichtung, die an eine Gasdiffusionslage angebunden wird, die Dichtung sich mit einem relativ kleinen Dichtungsquerschnitt (beispielsweise im Bereich von 5 mm² bis 30 mm²) rings um die Gasdiffusionslage erstreckt und die Gasdiffusionslage relativ große Seitenlängen aufweisen kann (beispielsweise Seitenlängen im Bereich von 70 mm bis 400 mm), entstehen je nach Positionierung und Anzahl der Einspritzpunkte Fließwege, die während des Einspritzvorgangs zu einem hohen Druckabfall über die Länge des Fließwegs hinweg führen. Der Werkzeuginnendruck, der im Durchdringungsbereich der Gasdiffusionslage auftritt, ergibt sich daher abhängig von der Position relativ zum Einspritzpunkt. In den Abschnitten des Durchdringungsbereichs, die nahe an einem Einspritzpunkt gelegen sind, ist während des Einspritzvorgangs ein höherer Werkzeuginnendruck zu erwarten als in weiter von dem Einspritzpunkt entfernten Abschnitten.

Bei bekannten an eine Gasdiffusionslage angespritzten Dichtungen kann daher in den nahe an Einspritzstellen gelegenen Abschnitten des Durchdringungsbereichs eine übermäßige Durchdringung der Gasdiffusionslage mit Dichtungsmaterial auftreten, wodurch die Porosität der Gasdiffusionslage lokal stark reduziert und die Funktion der elektrochemischen Vorrichtung beeinträchtigt wird.

Um die Durchdringung der Gasdiffusionslage mit Dichtungsmaterial zu reduzieren, kann es daher erforderlich sein, eine höhere Anzahl von Einspritzpunkten im Werkzeug vorzusehen und/oder die Prozessparameter in einen für eine rasche Durchführung des Spritzgießverfahrens unvorteilhaften Bereich zu verschieben (beispielsweise durch Verwendung einer niedrigeren Werkzeugtemperatur, einer niedrigeren Einspritzgeschwindigkeit und/oder niedrigerer Werkzeuginnendrücke). Alle diese Maßnahmen führen zu erhöhten Werkzeug- und/oder Prozesskosten.

Die US 2007/202381 A1 offenbart eine elektrochemisch aktive Einheit für eine elektrochemische Vorrichtung gemäß dem Oberbegriff von Anspruch 1.

Die US 2005/271926 A1 offenbart eine elektrochemisch aktive Einheit für eine elektrochemische Vorrichtung mit einer Dichtung, die an eine metallische Bipolarplatte angebunden ist.

Die US 2008/309027 A1 offenbart eine Dichtung zur Anwendung in der Fahrzeugtechnik, welche auf eine metallische Trägerplatte oder auf eine semipermeable Membran aufgebrachte elastomere Dichtelemente mit Dichtlippen umfasst.

Der vorliegenden Erfindung liegt die Aufgabe zugrunde, eine elektrochemisch aktive Einheit für eine elektrochemische Vorrichtung der vorstehend genannten Art zu schaffen, bei deren Herstellung eine möglichst gleichmäßige Ausbildung des Durchdringungsbereichs, in welchem die Gasdiffusionslage der elektrochemisch aktiven Einheit von dem Dichtungsmaterial der Dichtung durchdrungen ist, längs des Umfangs der Gasdiffusionslage erreichbar ist.

Diese Aufgabe durch eine elektrochemisch aktive Einheit nach Anspruch 1 gelöst.

Der vorliegenden Erfindung liegt das Konzept zugrunde, den Verbindungsbereich zwischen dem Verteilerbereich und dem Anbindungsbereich als eine Engstelle auszubilden, welche insbesondere bei einer Herstellung der Dichtung in einem Spritzgießverfahren einen hohen Strömungswiderstand aufweist.

Dadurch wird erreicht, dass vom gesamten Strömungswiderstand zwischen dem Einspritzpunkt und dem Anbindungsbereich der Dichtung, der an die Gasdiffusionslage angebunden ist, nur ein kleiner Teil auf den Verteilerbereich der Dichtung entfällt. Hierdurch wird am Anfang des Spritzgießvorgangs eine bevorzugte Füllung des Verteilerbereichs vor der Füllung des Anbindungsbereichs, der an die Gasdiffusionslage angebunden ist, erreicht.

Dies hat ferner zur Folge, dass in dem Bereich der Dichtung, der unmittelbar an die poröse Gasdiffusionslage angrenzt, ein möglichst geringer Innendruck des eingespritzten Dichtungsmaterials, insbesondere eines Elastomermaterials, in der Kavität des Spritzgießwerkzeuges auftritt.

Die Struktur der Dichtung, die im Spritzgießwerkzeug den Fließwegen des eingespritzten Dichtungsmaterials entspricht, ist vorzugsweise so gestaltet, dass die gesamten Strömungswiderstände und damit die Druckverluste zwischen einem Einspritzpunkt und verschiedenen Punkten im Anbindungsbereich der Dichtung, der an die Gasdiffusionslage angrenzt, in einem möglichst engen Wertebereich liegen.

Der Verteilerbereich der Dichtung weist einen großen Strömungsquerschnitt auf, so dass der Verteilerbereich während des Spritzgießvorgangs als Unterverteiler in der Werkzeugkavität dient.

Die Abschnitte des Verteilerbereichs, welche einen großen Strömungsquerschnitt aufweisen, können an der fertig hergestellten Dichtung verbleiben oder können durch Nacharbeit entfernt werden.

Wenn diese Abschnitte an der Dichtung verbleiben, können sie funktionale Elemente der Dichtung, beispielsweise eine oder mehrere Dichtlippen und/oder einen oder mehrere Verformungsbegrenzer der Dichtung, umfassen.

Bei der Herstellung der erfindungsgemäßen Dichtung liegen die Strömungswiderstände zwischen dem Einspritzpunkt des Dichtungsmaterials und den verschiedenen Abschnitten des Anbindungsbereichs der Dichtung, in welchem die Dichtung an die Gasdiffusionslage angebunden ist, in einem engen Wertebereich, wodurch eine gleichmäßige und/oder gleichzeitige Formfüllung des Anbindungsbereichs während des Spritzgießvorgangs erreicht wird.

Die Parameter des Herstellungsprozesses können daher so gewählt werden, dass der Innendruck in der Kavität in dem Anbindungsbereich der Dichtung deutlich niedriger ausfällt. Dadurch können die Abdrückkanten, die eine übermäßige Durchdringung der Gasdiffusionslage mit Dichtungsmaterial verhindern sollen, so ausgeführt werden, dass die Gasdiffusionslage weniger stark komprimiert wird. Dies ermöglicht eine einwandfreie Durchführung des Spritzgießprozesses auch dann, wenn die Dicke der Gasdiffusionslage und die Abmessungen der Spritzgießwerkzeuge in einem weiten Toleranzbereich variieren.

Außerdem wird die Prozesssicherheit dadurch erhöht, dass eine mechanische Beschädigung der Gasdiffusionslage durch eine übermäßige Verpressung vermieden wird.

Bei der Herstellung einer an eine Gasdiffusionslage angebundenen Dichtung in einem Spritzgießwerkzeug tritt eine Schrumpfung des Dichtungsmaterials durch den Aushärtungsvorgang und zusätzlich eine Wärmedehnung des Dichtungsmaterials auf, die von der Wärmedehnung der Gasdiffusionslage verschieden sein kann. Hierdurch kann es zu Bauteilspannungen kommen, die zu einem Verzug führen können.

Der dünne Verbindungsbereich zwischen dem Verteilerbereich und dem Anbindungsbereich der Dichtung ist vorzugsweise flexibel verformbar, wodurch ein Teil dieses Verzuges und/oder der Schrumpfung des Dichtungsmaterials kompensiert werden und somit der Bauteilverzug vermindert werden kann.

Die erfindungsgemäße elektrochemisch aktive Einheit kann insbesondere in einer Brennstoffzellenvorrichtung, insbesondere in einer PEM(Polymer Electrolyte Membrane)-Brennstoffzellenvorrichtung oder in einem Elektrolyseur, verwendet werden.

Die Dichtung kann an nur eine Gasdiffusionslage der elektrochemisch aktiven Einheit angebunden sein oder an zwei Gasdiffusionslagen der elektrochemisch aktiven Einheit, insbesondere an eine kathodenseitige Gasdiffusionslage und an eine anodenseitige Gasdiffusionslage der elektrochemisch aktiven Einheit.

Ferner kann die Dichtung auch an die Membran-Elektroden-Anordnung der elektrochemisch aktiven Einheit und/oder an eine Bipolarplatte angebunden sein.

Die Dichtung der erfindungsgemäßen elektrochemisch aktiven Einheit wird vorzugsweise durch ein Spritzgießverfahren in einem Spritzgießwerkzeug hergestellt.

Dabei wird die Gasdiffusionslage, die eine poröse Struktur aufweist, teilweise von Dichtungsmaterial durchdrungen.

Die Dichtung kann ferner auch an eine Endplatte einer elektrochemischen Vorrichtung, insbesondere eines Brennstoffzellenstapels oder eines Elektrolyseurs, angebunden sein.

Die Dichtung umschließt im Wesentlichen die Außenkanten der Gasdiffusionslage, an welche die Dichtung angebunden ist.

Der Anbindungsbereich steht in direktem Kontakt mit der Gasdiffusionslage.

Der Verteilerbereich der Dichtung ist außerhalb des Anbindungsbereichs vorgesehen und kann den Anbindungsbereich vollständig oder nur abschnittsweise umschließen.

Der Verteilerbereich und der Anbindungsbereich sind durch den Verbindungsbereich miteinander verbunden.

Der Verteilerbereich weist vorzugsweise einen großen - senkrecht zu einer Längsrichtung des Verteilerbereichs genommenen - durchströmbaren Querschnitt auf.

Der Querschnitt des Verteilerbereichs beträgt vorzugsweise mindestens 1 mm².

Ferner kann vorgesehen sein, dass der Querschnitt des Verteilerbereichs höchstens 20 mm² beträgt.

Die maximale Höhe Hv des Verteilerbereichs beträgt vorzugsweise mindestens 0,5 mm.

Die maximale Höhe Hv des Verteilerbereichs beträgt vorzugsweise höchstens 2 mm.

Der Verbindungsbereich weist eine deutlich geringere Dicke oder Höhe als der Verteilerbereich auf.

Mit der Höhe eines Bereichs der Dichtung wird in dieser Beschreibung und in den beigefügten Ansprüchen die Ausdehnung des betreffenden Bereichs der Dichtung parallel zu der Stapelrichtung der elektrochemischen Vorrichtung, in welcher die elektrochemisch aktive Einheit verwendet wird, bezeichnet.

Der Verbindungsbereich kann als ein dünner Film ausgeführt sein.

Die kleinste Höhe hc des Verbindungsbereichs beträgt vorzugsweise weniger als ein Sechstel, insbesondere weniger als ein Achtel, der größten Höhe Hv des Verteilerbereichs und/oder vorzugsweise weniger als ein Sechstel, insbesondere weniger als ein Achtel, der größten Höhe H_{A} des Anbindungsbereichs.

Die kleinste Höhe hc des Verbindungsbereichs beträgt vorzugsweise weniger als 0,3 mm, insbesondere weniger als 0,1 mm, besonders bevorzugt weniger als 0,05 mm.

Die Dicke des Verbindungsbereichs kann längs des Umfangs der Gasdiffusionslage variieren.

Die erfindungsgemäße elektrochemisch aktive Einheit umfasst eine Dichtung, die direkt an eine oder an mehrere poröse Lagen der elektrochemisch aktiven Einheit, vorzugsweise in einem Spritzgießverfahren, angebunden wird, wobei vorzugsweise ein in die Dichtung integrierter Filmanguss vorgesehen wird. Dieser kann dazu genutzt werden, den in der Kavität des Spritzgießwerkzeugs unmittelbar an der porösen Lage maximal auftretenden Innendruck deutlich zu reduzieren, um hierdurch die Durchdringung der porösen Lage mit dem Dichtungsmaterial deutlich zu verringern.

Bei einer bevorzugten Ausgestaltung der Erfindung ist vorgesehen, dass die kleinste Höhe hc des Verbindungsbereichs kleiner ist als 0,3 mm, insbesondere kleiner ist als 0,1 mm, besonders bevorzugt kleiner ist als 0,05 mm.

Der Verbindungsbereich kann beispielsweise eine konstante Höhe von beispielsweise 0,1 mm aufweisen.

Der Verbindungsbereich ist vorzugsweise zumindest abschnittsweise, insbesondere im Wesentlichen vollständig, als ein flexibler Film ausgebildet.

Der Verbindungsbereich weist Verdickungsabschnitte auf, in welchen der Verbindungsbereich eine Höhe H_{D} aufweist, die größer ist als die kleinste Höhe hc des Verbindungsbereichs, und welche in einer Längsrichtung des Verbindungsbereichs voneinander beabstandet sind.

Dabei kann insbesondere vorgesehen sein, dass mindestens einer der Verdickungsabschnitte sich in einer senkrecht zu der Längsrichtung des Verbindungsbereichs verlaufenden Querrichtung des Verbindungsbereichs über die gesamte Breite des Verbindungsbereichs hinweg erstreckt.

Ferner kann vorgesehen sein, dass die Höhe H_{D} der Verdickungsabschnitte, die Erstreckung L_{D} jeweils eines Verdickungsabschnitts längs der Längsrichtung des Verbindungsbereichs und/oder der Abstand A_{D} zwischen jeweils zwei in der Längsrichtung des Verbindungsbereichs aufeinanderfolgenden Verdickungsabschnitten längs der Längsrichtung des Verbindungsbereichs variiert.

Die Dichtung kann eine Dichtlippe oder mehrere Dichtlippen, beispielsweise zwei Dichtlippen, aufweisen, die einen Bestandteil des Verteilerbereichs oder einen Bestandteil des Anbindungsbereichs bilden.

Ferner kann die Dichtung mindestens einen Verformungsbegrenzer aufweisen, der einen Bestandteil des Verteilerbereichs oder einen Bestandteil des Anbindungsbereichs bildet.

Ein solcher Verformungsbegrenzer (auch "hard stop" genannt) dient dazu, die Verpressung anderer Elemente der Dichtung, beispielsweise einer Dichtlippe, bei der Beaufschlagung der elektrochemisch aktiven Einheit mit einer Spannkraft zu begrenzen.

Der Verformungsbegrenzer kann insbesondere als ein Anschlag dienen, welcher eine weitere Verformung der Dichtung bei Beaufschlagung mit einer Spannkraft verhindert.

Bei einer bevorzugten Ausgestaltung der Erfindung ist vorgesehen, dass die größte Höhe Hv des Verteilerbereichs mindestens 1,2 mm beträgt.

Der - senkrecht zu der Längsrichtung des Verteilerbereichs genommene - Querschnitt des Verteilerbereichs kann längs der Längsrichtung des Verteilerbereichs im Wesentlichen konstant bleiben oder längs der Längsrichtung des Verteilerbereichs variieren.

Insbesondere kann vorgesehen sein, dass die Größe des Querschnitts des Verteilerbereichs in Abhängigkeit vom Abstand von einem Einspritzpunkt des Dichtungsmaterials variiert. Beispielsweise kann vorgesehen sein, dass die Größe des Querschnitts des Verteilerbereichs mit wachsendem Abstand von einem Einspritzpunkt anwächst.

Bei einer bevorzugten Ausgestaltung der Erfindung ist vorgesehen, dass die Dichtung spritzgegossen ist und das Material der Dichtung einen Teil von mindestens einer Gasdiffusionslage der elektrochemisch aktiven Einheit durchdringt.

Die erfindungsgemäße elektrochemisch aktive Einheit kann zwei jeweils an mindestens eine Gasdiffusionslage angebundene Dichtungen umfassen.

Die erfindungsgemäße elektrochemisch aktive Einheit eignet sich insbesondere zur Verwendung in einer elektrochemischen Vorrichtung, beispielsweise in einem Brennstoffzellenstapel oder in einem Elektrolyseur.

Die Dichtung der elektrochemisch aktiven Einheit kann im montierten Zustand der elektrochemischen Vorrichtung an einer anderen Dichtung und/oder an einer Bipolarplatte fluiddicht abdichtend anliegen.

Der grundsätzliche Aufbau und die Herstellung einer solchen elektrochemischen Vorrichtung sind in der DE 10 2015 109 393 A1 beschrieben, auf welche diesbezüglich Bezug genommen und welche zum Bestandteil dieser Anmeldung gemacht wird.

Das Material der Dichtung ist vorzugsweise ein Elastomermaterial.

Weitere Merkmale und Vorteile der Erfindung sind Gegenstand der nachfolgenden Beschreibung und der zeichnerischen Darstellung von Ausführungsbeispielen.

In den Zeichnungen zeigen:

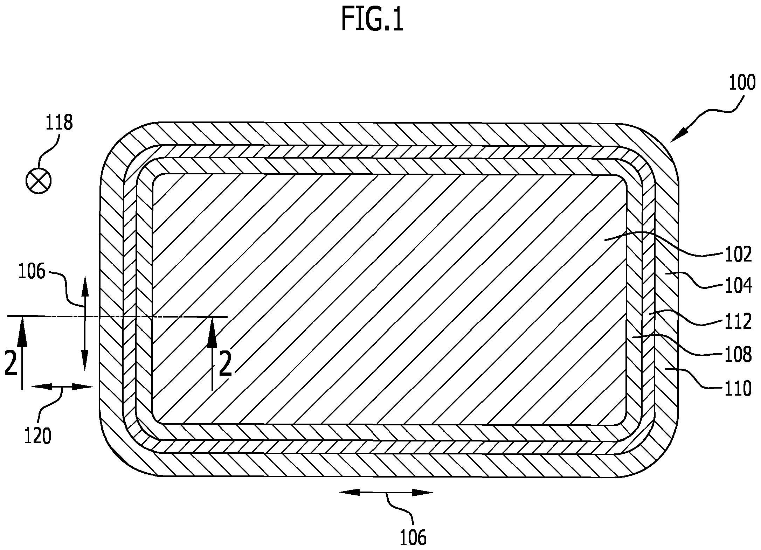

- Fig. 1: eine schematische Draufsicht auf eine nicht erfindungsgemäße elektrochemisch aktive Einheit für eine elektrochemische Vorrichtung, welche eine (nicht dargestellte) Membran-Elektroden-Anordnung, mindestens eine Gasdiffusionslage und eine Dichtung, die an mindestens eine der mindestens einen Gasdiffusionslage angebunden ist, umfasst;

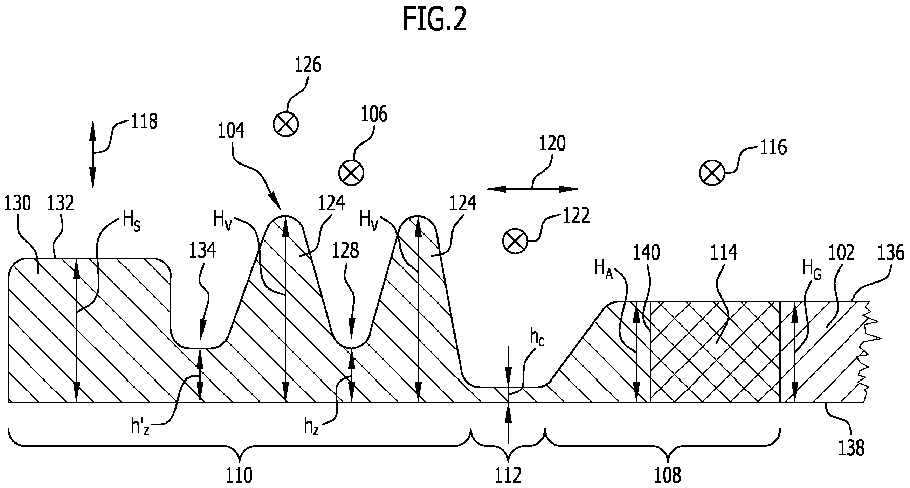

- Fig. 2: einen ausschnittsweisen Querschnitt durch die Dichtung und die Gasdiffusionslage aus Fig. 1, längs der Linie 2 - 2 in Fig. 1, wobei aus dem Querschnitt zu ersehen ist, dass die Dichtung einen Anbindungsbereich, welcher einen Teil der mindestens einen Gasdiffusionslage der elektrochemisch aktiven Einheit durchdringt, einen Verteilerbereich, welcher eine oder mehrere Dichtlippen und/oder einen Verformungsbegrenzer der Dichtung umfasst, und einen den Verteilerbereich und den Anbindungsbereich miteinander verbindenden Verbindungsbereich umfasst;

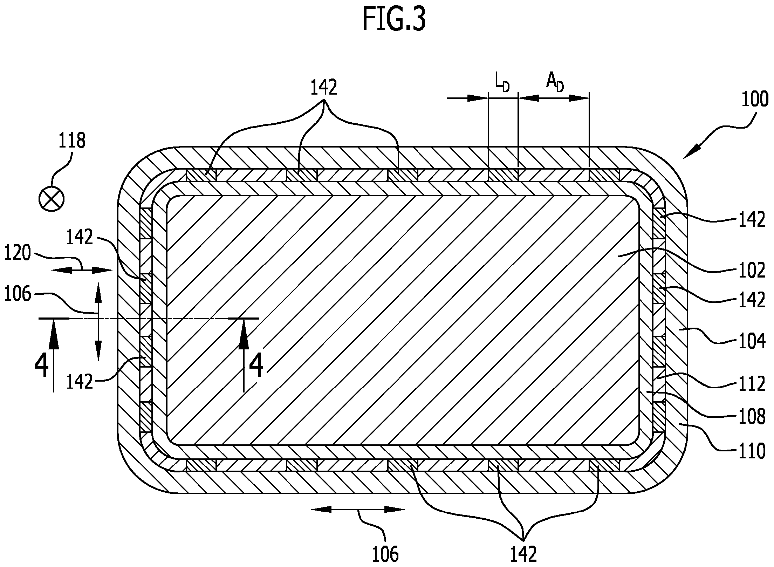

- Fig. 3: eine der Fig. 1 entsprechende Draufsicht auf eine erfindungsgemäße zweite Ausführungsform einer elektrochemisch aktiven Einheit für eine elektrochemische Vorrichtung, bei welcher der Verbindungsbereich der Dichtung Verdickungsabschnitte aufweist, die in einer Längsrichtung des Verbindungsbereichs voneinander beabstandet sind; und

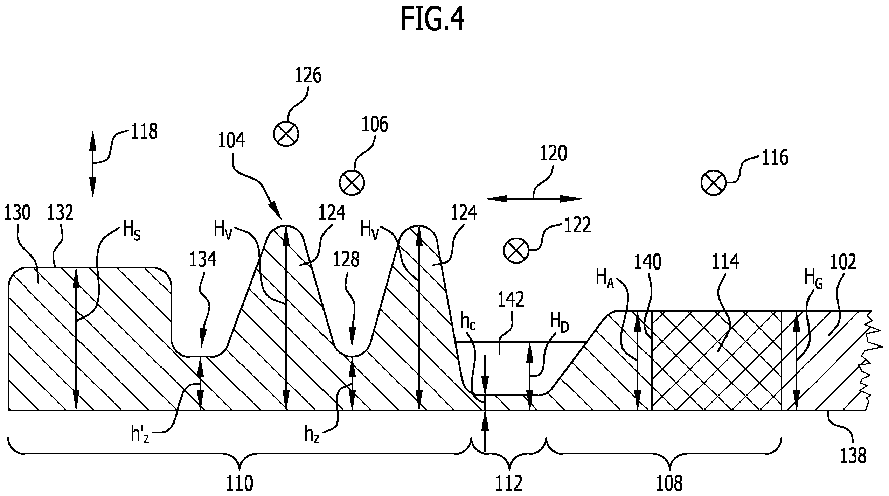

- Fig. 4: einen der Fig. 2 entsprechenden ausschnittsweisen Querschnitt durch die Dichtung und die mindestens eine Gasdiffusionslage der elektrochemisch aktiven Einheit aus Fig. 3, längs der Linie 4 - 4 in Fig. 3, wobei aus dem Querschnitt zu ersehen ist, dass die Dichtung einen Anbindungsbereich, einen Verteilerbereich und einen den Anbindungsbereich und den Verteilerbereich miteinander verbindenden Verbindungsbereich umfasst, wobei der Verbindungsbereich in einer Längsrichtung des Verbindungsbereichs voneinander beabstandete Verdickungsabschnitte aufweist.

Gleiche oder funktional äquivalente Elemente sind in allen Figuren mit denselben Bezugszeichen bezeichnet.

Eine in den Fig. 1 und 2 dargestellte, als Ganzes mit 100 bezeichnete elektrochemisch aktive Einheit für eine (nicht als Ganzes dargestellte) elektrochemische Vorrichtung, beispielsweise für einen Brennstoffzellenstapel oder einen Elektrolyseur, umfasst eine (nicht dargestellte) Membran-Elektroden-Anordnung, mindestens eine Gasdiffusionslage 102 und eine Dichtung 104, welche sich längs einer Längsrichtung 106 der Dichtung 104 um die Gasdiffusionslage 102 herum erstreckt.

Wie am besten aus dem Querschnitt von Fig. 2 zu ersehen ist, umfasst die Dichtung 104 einen Anbindungsbereich 108, einen der Gasdiffusionslage 102 abgewandten Verteilerbereich 110 und einen den Anbindungsbereich 108 und den Verteilerbereich 110 miteinander verbindenden Verbindungsbereich 112.

Die Dichtung 104 ist vorzugsweise einstückig ausgebildet.

Die Dichtung 104 ist vorzugsweise spritzgegossen.

Die Dichtung 104 ist vorzugsweise aus einem Elastomermaterial gebildet.

Das Elastomermaterial dringt vorzugsweise in die zugeordnete Gasdiffusionslage 102 ein, so dass die Dichtung 104 stoffschlüssig und/oder formschlüssig mit der Gasdiffusionslage 102 verbunden ist.

Der äußere Randbereich der Gasdiffusionslage 102, welcher von dem Material der Dichtung 104 durchdrungen ist und somit einen Bestandteil des Anbindungsbereichs 108 bildet, ist in Fig. 2 durch Kreuzschraffur gekennzeichnet und wird als Durchdringungsbereich 114 bezeichnet.

Der Anbindungsbereich 108 erstreckt sich längs einer Längsrichtung 116, vorzugsweise ringförmig geschlossen, um die Gasdiffusionslage 102 herum.

Die Längsrichtung 116 des Anbindungsbereichs 108 verläuft parallel zu der Längsrichtung 106 der Dichtung 104 als Ganzes.

Die maximale Höhe H_{A} des Anbindungsbereichs 108 entspricht vorzugsweise mindestens der Höhe H_{G} der Gasdiffusionslage 102.

Die Höhe eines Elements bezeichnet in dieser Beschreibung und in den beigefügten Ansprüchen die Ausdehnung des jeweiligen Elements in einer Stapelrichtung 118 der elektrochemischen Vorrichtung, in welcher eine Mehrzahl von elektrochemisch aktiven Einheiten 100 längs der Stapelrichtung übereinander angeordnet ist.

Eine elektrochemische aktive Einheit 100 kann zusammen mit jeweils einer (nicht dargestellten) Bipolarplatte eine elektrochemische Zelle der elektrochemischen Vorrichtung bilden.

Die elektrochemische Vorrichtung umfasst dann mehrere in der Stapelrichtung 118 übereinander angeordnete elektrochemische Zellen sowie vorzugsweise zwei Endplatten, zwischen denen der Stapel von elektrochemischen Zellen angeordnet ist und welche mittels einer (nicht dargestellten) Spannvorrichtung gegeneinander verspannt sind, um die dazwischen angeordneten elektrochemischen Zellen und insbesondere deren elektrochemisch aktive Einheiten 100 mit einer längs der Stapelrichtung 118 gerichteten Spannkraft zu beaufschlagen.

In einer Querrichtung 120, welche senkrecht zu der Längsrichtung 106 der Dichtung 104 und senkrecht zu der Stapelrichtung 118 ausgerichtet ist, folgt auf den Anbindungsbereich 108 nach außen der Verbindungsbereich 112 der Dichtung 104.

Der Verbindungsbereich 112 ist vorzugsweise als ein flexibler Film ausgebildet und weist eine kleinste Höhe hc auf, welche kleiner ist als ein Viertel der größten Höhe H_{A} des Anbindungsbereichs 108.

Der Verbindungsbereich 112 ist vorzugsweise im Wesentlichen elastisch verformbar ausgebildet.

Der Verbindungsbereich 112 erstreckt sich längs einer Längsrichtung 122 des Verbindungsbereichs 112 in der Umfangsrichtung um den Anbindungsbereich 108 herum und ist vorzugsweise ringförmig geschlossen ausgebildet.

Die Längsrichtung 122 des Verbindungsbereichs 112 verläuft parallel zu der Längsrichtung 106 der Dichtung 104 als Ganzes.

An den Verbindungsbereich 112 schließt sich in der Querrichtung 120 nach außen der Verteilerbereich 110 an, welcher eine oder mehrere Dichtlippen 124 aufweist.

Die Dichtlippen 124 weisen im Ruhezustand der Dichtung 104, das heißt in einem entspannten Zustand, in welchem die Dichtlippen 124 nicht mit einer Dichtkraft beaufschlagt sind, eine Höhe Hv auf, welche der größten Höhe des Verteilerbereichs 110 entspricht.

Wenn mehrere Dichtlippen 124 vorhanden sind, können die Höhen dieser Dichtlippen 124 im entlasteten Zustand auch voneinander abweichen, wobei dann die größte Höhe Hv dieser Dichtlippen 124 die größte Höhe Hv des Verteilerbereichs 110 bildet.

Die Dichtlippen 124 erstrecken sich längs einer Längsrichtung 126 des Verteilerbereichs 110 in der Umfangsrichtung um den Verbindungsbereich 112 und um den Anbindungsbereich 108 herum und sind vorzugsweise ringförmig geschlossen ausgebildet.

Die Längsrichtung 126 des Verteilerbereichs 110 verläuft parallel zu der Längsrichtung 106 der Dichtung 104 als Ganzes.

Wenn mehrere Dichtlippen 124 im Verteilerbereich 110 vorhanden sind, so sind diese durch jeweils einen niedrigeren Zwischenbereich 128 voneinander getrennt, welcher eine kleinste Höhe hz aufweist.

Um die maximale Verformung der Dichtlippen 124 zu begrenzen, kann der Verteilerbereich 110 ferner einen Verformungsbegrenzer 130 umfassen.

Der Verformungsbegrenzer 130 ist vorzugsweise außerhalb der - insbesondere ringförmig geschlossenen - Dichtlippen 124 angeordnet und weist eine Höhe Hs auf.

Der Verformungsbegrenzer 130 weist vorzugsweise eine abgeflachte Spitze mit einer im Wesentlichen ebenen Stopperfläche 132 auf.

Der Verformungsbegrenzer 130 kann sich längs der Längsrichtung 126 des Verteilerbereichs 110 in der Umfangsrichtung um die Dichtlippen 124 herum erstrecken und ist vorzugsweise ringförmig geschlossen ausgebildet.

Von der einzigen Dichtlippe 124 oder der am weitesten außen liegenden Dichtlippe 124 ist der Verformungsbegrenzer 130 vorzugsweise durch einen Zwischenbereich 134 getrennt, welcher eine geringere Höhe aufweist als die Dichtlippe 124 und der Verformungsbegrenzer 130.

Der Zwischenbereich 134 weist eine kleinste Höhe h'_{Z} auf, welche gleich groß sein kann wie die kleinste Höhe hz des Zwischenbereichs 128 zwischen zwei Dichtlippen 124.

Die kleinste Höhe h'z des Zwischenbereichs 134 kann aber auch größer oder kleiner sein als die kleinste Höhe hz des Zwischenbereichs 128.

Die kleinste Höhe hc des Verbindungsbereichs 112 ist kleiner als ein Viertel der größten Höhe Hv des Verteilerbereichs 110, so dass der Verbindungsbereich 112 eine Engstelle zwischen dem Verteilerbereich 110 und dem Anbindungsbereich 108 der Dichtung 104 bildet.

Die Herstellung der vorstehend beschriebenen Dichtung 104 an der Gasdiffusionslage 102 in einem Spritzgießverfahren erfolgt beispielsweise wie folgt:
Ein (nicht dargestelltes) erstes Spritzgieß-Werkzeug-Teil wird mit einer Abdrückkante auf die Gasdiffusionslage 102, beispielsweise auf die in Fig. 2 oben dargestellte Begrenzungsfläche 136 der Gasdiffusionslage 102, aufgesetzt, und ein zweites (nicht dargestelltes) Spritzgieß-Werkzeug-Teil wird an die jeweils gegenüberliegende, in Fig. 2 unten dargestellte Begrenzungsfläche 138 der Gasdiffusionslage 102 angelegt, um als Gegenhalter für die Verpressung der Gasdiffusionslage 102 im Bereich der Abdrückkante des ersten Spritzgieß-Werkzeug-Teils zu dienen, so dass zwischen den beiden Spritzgieß-Werkzeug-Teilen eine mit dem, vorzugsweise elastomeren, Spritzgießmaterial oder Dichtungsmaterial auszufüllende Kavität gebildet wird.

Die Einspritzpunkte für die Zudosierung des Spritzgießmaterials in die Kavität sind vorzugsweise außerhalb des Verformungsbegrenzers 130 auf separat dafür vorgesehenen Laschen angeordnet.

Beim anschließenden Befüllen der Kavität mit dem auszuhärtenden Spritzgießmaterial, aus welchem die Dichtung 104 gebildet wird, dringt das Spritzgießmaterial zunächst in den Verteilerbereich 110 am äußeren Rand der Dichtung 104 ein, der einen großen - senkrecht zur Längsrichtung 126 genommenen - durchströmbaren Querschnitt aufweist, welcher beispielsweise 1 mm² bis ungefähr 20 mm² beträgt.

Die Höhen hz, h'z, Hs und Hv der verschiedenen Bereiche des Verteilerbereichs 110 liegen vorzugsweise im Bereich von ungefähr 0,5 mm bis 2 mm.

Die Höhe hc des Verbindungsbereichs 112 ist hingegen wesentlich geringer und beträgt vorzugsweise weniger als 0,3 mm, insbesondere weniger als 0,1 mm, besonders bevorzugt weniger als 0,05 mm.

Die Höhe hc des Verbindungsbereichs 112 kann in der Längsrichtung 122 des Verbindungsbereichs 112 und somit längs des Umfangs der Gasdiffusionslage 102 variieren.

Aufgrund seiner geringen Höhe weist der Verbindungsbereich 112 einen deutlich höheren Strömungswiderstand für das eingespritzte Spritzgießmaterial auf als der Verteilerbereich 110, weshalb sich das eingespritzte Spritzgießmaterial zunächst im Verteilerbereich 110 verteilt und erst dann durch den Verbindungsbereich 112 in den Anbindungsbereich 108 vordringt.

Aus der Kavität dringt das Spritzgießmaterial auch in den der Kavität zugewandten Randbereich der porösen Gasdiffusionslage 102 ein, so dass der Durchdringungsbereich 114 der Gasdiffusionslage 102 von dem Material der Dichtung 104 durchdrungen wird, wodurch der Anbindungsbereich 108 der Dichtung 104 stoffschlüssig und/oder formschlüssig mit der Gasdiffusionslage 102 verbunden ist.

Dabei umschließt die Dichtung 104 die Außenfläche 140 der Gasdiffusionslage 102 im Wesentlichen vollständig.

Nach dem Aushärten des Spritzgießmaterials zu dem elastomeren Dichtungsmaterial und dem Entfernen der Spritzgieß-Werkzeug-Teile hat die Anordnung aus der Dichtung 104 und der Gasdiffusionslage 102 die in Fig. 2 gezeigte Gestalt.

Die Gasdiffusionslage 102 mit der daran angeformten Dichtung 104 kann nun mit einer Membran-Elektronen-Anordnung und vorzugsweise einer weiteren Gasdiffusionslage, welche ebenfalls eine daran angeformte Dichtung aufweisen kann, zu der elektrochemisch aktiven Einheit 100 zusammengefügt werden.

Aus den in der Stapelrichtung 118 aufeinanderfolgend angeordneten elektrochemisch aktiven Einheiten 100 und dazwischen angeordneten Bipolarplatten sowie endständig angeordneten Endplatten kann dann die elektrochemische Vorrichtung zusammengesetzt werden.

Eine in den Fig. 3 und 4 dargestellte zweite Ausführungsform einer elektrochemisch aktiven Einheit 100 unterscheidet sich von der in den Fig. 1 und 2 dargestellten ersten Ausführungsform dadurch, dass der Verbindungsbereich 112 der Dichtung 104 eine Mehrzahl von Verdickungsabschnitten 142 aufweist, die eine Höhe H_{D} aufweisen, welche die Höhe hc der dazwischenliegenden Abschnitte des Verbindungsbereichs 112 übertrifft.

Beispielsweise kann vorgesehen sein, dass die Höhe H_{D} mindestens das Dreifache der Höhe hc beträgt.

Insbesondere kann vorgesehen sein, dass die Höhe H_{D} mindestens ungefähr 0,15 mm, vorzugsweise mindestens ungefähr 0,3 mm, besonders bevorzugt mindestens ungefähr 0,9 mm, beträgt.

In der Längsrichtung 122 des Verbindungsbereichs 112 sind die Verdickungsabschnitte 142 voneinander beabstandet.

Insbesondere kann der Abstand A_{D} zwischen zwei in der Längsrichtung 122 des Verbindungsbereichs 112 aufeinanderfolgenden Verdickungsabschnitten 142 mindestens ungefähr 5 mm, insbesondere mindestens ungefähr 10 mm, betragen.

Die Erstreckung L_{D} jeweils eines Verdickungsabschnitts 142 längs der Längsrichtung 122 des Verbindungsbereichs 112 ist vorzugsweise kleiner als der Abstand A_{D} zwischen zwei aufeinanderfolgenden Verdickungsabschnitten 142 längs der Längsrichtung 122 des Verbindungsbereichs 112.

Durch die dickeren Verdickungsabschnitte 142 wird eine mechanische Stabilisierung des Verbindungsbereichs 112, insbesondere bei der Entformung der Dichtung 104 aus den Spritzgieß-Werkzeug-Teilen, bewirkt.

Im Übrigen stimmt die in den Fig. 3 und 4 dargestellte zweite Ausführungsform der elektrochemisch aktiven Einheit 100 hinsichtlich Aufbau, Funktion und Herstellungsweise mit der in den Fig. 1 und 2 dargestellten ersten Ausführungsform überein, auf deren vorstehende Beschreibung insoweit Bezug genommen wird.

## Patentansprüche

1. Elektrochemisch aktive Einheit für eine elektrochemische Vorrichtung, umfassend
eine Membran-Elektroden-Anordnung, mindestens eine Gasdiffusionslage (102) und
eine Dichtung (104), die an mindestens eine der mindestens einen Gasdiffusionslage (102) angebunden ist,
wobei die Dichtung (104) einen Anbindungsbereich (108), einen Verteilerbereich (110) und einen den Anbindungsbereich (108) und den Verteilerbereich (110) miteinander verbindenden Verbindungsbereich (112) umfasst,
**dadurch gekennzeichnet,**
**dass** der Verbindungsbereich (112) eine kleinste Höhe (hc) aufweist, welche geringer ist als ein Viertel der größten Höhe (Hv) des Verteilerbereichs (110) und geringer ist als ein Viertel der größten Höhe (H_{A}) des Anbindungsbereichs (108), und
**dass** der Verbindungsbereich (112) Verdickungsabschnitte (142) aufweist, in welchen der Verbindungsbereich (112) eine Höhe (H_{D}) aufweist, welche größer ist als die kleinste Höhe (hc) des Verbindungsbereichs (112), und welche in einer Längsrichtung (122) des Verbindungsbereichs (112) voneinander beabstandet sind.

2. Elektrochemisch aktive Einheit nach Anspruch 1, **dadurch gekennzeichnet, dass** die kleinste Höhe (hc) des Verbindungsbereichs (112) kleiner ist als 0,3 mm.

3. Elektrochemisch aktive Einheit nach einem der Ansprüche 1 oder 2,
**dadurch gekennzeichnet, dass** der Verbindungsbereich (112) zumindest abschnittsweise als ein flexibler Film ausgebildet ist.

4. Elektrochemisch aktive Einheit nach einem der Ansprüche 1 bis 3, **dadurch gekennzeichnet, dass** mindestens einer der Verdickungsabschnitte (142) sich in einer senkrecht zu der Längsrichtung (122) des Verbindungsbereichs (112) verlaufenden Querrichtung (120) des Verbindungsbereichs (112) über die gesamte Breite des Verbindungsbereichs (112) erstreckt.

5. Elektrochemisch aktive Einheit nach einem der Ansprüche 1 bis 4, **dadurch gekennzeichnet, dass** die Höhe (H_{D}) der Verdickungsabschnitte (142), die Erstreckung (L_{D}) jeweils eines der Verdickungsabschnitte (142) längs der Längsrichtung (122) des Verbindungsbereichs (112) und/oder der Abstand (A_{D}) zwischen jeweils zwei in der Längsrichtung (122) des Verbindungsbereichs (112) aufeinanderfolgenden Verdickungsabschnitten (142) längs der Längsrichtung (122) des Verbindungsbereichs (112) variiert.

6. Elektrochemisch aktive Einheit nach einem der Ansprüche 1 bis 5, **dadurch gekennzeichnet, dass** die Dichtung (104) mindestens eine Dichtlippe (124) aufweist, die einen Bestandteil des Verteilerbereichs (110) oder einen Bestandteil des Anbindungsbereichs (108) bildet.

7. Elektrochemisch aktive Einheit nach einem der Ansprüche 1 bis 6, **dadurch gekennzeichnet, dass** die Dichtung (104) mindestens einen Verformungsbegrenzer (130) aufweist, der einen Bestandteil des Verteilerbereichs (110) oder einen Bestandteil des Anbindungsbereichs (108) bildet.

8. Elektrochemisch aktive Einheit nach einem der Ansprüche 1 bis 7, **dadurch gekennzeichnet, dass** die größte Höhe (Hv) des Verteilerbereichs (110) mindestens 1,2 mm beträgt.

9. Elektrochemisch aktive Einheit nach einem der Ansprüche 1 bis 8, **dadurch gekennzeichnet, dass** der Querschnitt des Verteilerbereichs (110) längs einer Längsrichtung (126) des Verteilerbereichs (110) variiert.

10. Elektrochemisch aktive Einheit nach einem der Ansprüche 1 bis 9, **dadurch gekennzeichnet, dass** die Dichtung (104) spritzgegossen ist und dass das Material der Dichtung (104) einen Teil von mindestens einer Gasdiffusionslage (102) der elektrochemisch aktiven Einheit (100) durchdringt.

## Claims

1. Electrochemically active unit for an electrochemical device, comprising
a membrane electrode arrangement,
at least one gas diffusion layer (102), and
a seal (104), which is joined to at least one of the at least one gas diffusion layer (102),
wherein the seal (104) comprises a joint region (108), a distribution region (110), and a connecting region (112) connecting the joint region (108) and the distribution region (110) to one another,
**characterized in that**
the connecting region (112) has a smallest height (hc) that is smaller than one fourth of the greatest height (Hv) of the distribution region (110) and is smaller than one fourth of the greatest height (H_{A}) of the joint region (108), and
**in that** the connecting region (112) has thickened portions (142) in which the connecting region (112) has a height (H_{D}) that is greater than the smallest height (hc) of the connecting region (112), and which are spaced at a distance from one another in a longitudinal direction (122) of the connecting region (112).

2. Electrochemically active unit in accordance with Claim 1, **characterized in that** the smallest height (hc) of the connecting region (112) is smaller than 0.3 mm.

3. Electrochemically active unit in accordance with either of Claims 1 or 2, **characterized in that** the connecting region (112) is configured as a flexible film at least in sections.

4. Electrochemically active unit in accordance with any one of Claims 1 to 3, **characterized in that** at least one of the thickened portions (142) extends in a transverse direction (120) of the connecting region (112) running perpendicularly to the longitudinal direction (122) of the connecting region (112) over the entire width of the connecting region (112).

5. Electrochemically active unit in accordance with any one of Claims 1 to 4, **characterized in that** the height (H_{D}) of the thickened portions (142), the extent (L_{D}) of a respective one of the thickened portions (142) along the longitudinal direction (122) of the connecting region (112), and/or the distance (A_{D}) between two respective thickened portions (142) succeeding one another in the longitudinal direction (122) of the connecting region (112) varies along the longitudinal direction (122) of the connecting region (112).

6. Electrochemically active unit in accordance with any one of Claims 1 to 5, **characterized in that** the seal (104) has at least one sealing lip (124), which forms a constituent part of the distribution region (110) or a constituent part of the joint region (108).

7. Electrochemically active unit in accordance with any one of Claims 1 to 6, **characterized in that** the seal (104) has at least one deformation limiter (130), which forms a constituent part of the distribution region (110) or a constituent part of the joint region (108).

8. Electrochemically active unit in accordance with any one of Claims 1 to 7, **characterized in that** the greatest height (H_{V}) of the distribution region (110) is at least 1.2 mm.

9. Electrochemically active unit in accordance with any one of Claims 1 to 8, **characterized in that** the cross section of the distribution region (110) varies along a longitudinal direction (126) of the distribution region (110).

10. Electrochemically active unit in accordance with any one of Claims 1 to 9, **characterized in that** the seal (104) is injection molded and **in that** the material of the seal (104) penetrates part of at least one gas diffusion layer (102) of the electrochemically active unit (100).

## Revendications

1. Unité électrochimiquement active pour un dispositif électrochimique, comprenant
un agencement membrane-électrodes,
au moins une couche de diffusion gazeuse (102) et
un joint (104) qui est fixé à au moins une de la au moins une couche de diffusion gazeuse (102),
le joint (104) comprenant une zone de fixation (108), une zone de distribution (110) et une zone de liaison (112) reliant ensemble la zone de fixation (108) et la zone de distribution (110),
**caractérisée en ce que**
la zone de liaison (112) présente la hauteur la plus faible (h_{C}), qui est inférieure à un quart de la hauteur la plus élevée (H_{V}) de la zone de distribution (110) et inférieure à un quart de la hauteur la plus élevée (H_{A}) de la zone de fixation (108), et
la zone de liaison (112) présente des sections d'épaississement (142) dans lesquelles la zone de liaison (112) présente une hauteur (H_{D}) qui est supérieure à la hauteur la plus faible (h_{C}) de la zone de liaison (112) et qui sont écartées les unes des autres dans une direction longitudinale (122) de la zone de liaison (112).

2. Unité électrochimiquement active selon la revendication 1, **caractérisée en ce que** la hauteur la plus faible (h_{C}) de la zone de liaison (112) est inférieure à 0,3 mm.

3. Unité électrochimiquement active selon l'une des revendications 1 ou 2, **caractérisée en ce que** la zone de liaison (112) est conçue au moins par tronçon en tant que film flexible.

4. Unité électrochimiquement active selon l'une des revendications 1 à 3, **caractérisée en ce qu'**au moins l'une des sections d'épaississement (142) s'étend dans une direction transversale (120) de la zone de liaison (112) perpendiculaire à la direction longitudinale (122) de la zone de liaison (112) sur la totalité de la largeur de la zone de liaison (112).

5. Unité électrochimiquement active selon l'une des revendications 1 à 4, **caractérisée en ce que** la hauteur (H_{D}) des sections d'épaississement (142), l'étendue (L_{D}) respectivement d'une des sections d'épaississement (142) le long de la direction longitudinale (122) de la zone de liaison (112) et/ou la distance (A_{D}) entre respectivement deux sections d'épaississement (142) successives dans la direction longitudinale (122) de la zone de liaison (112) varient le long de la direction longitudinale (122) de la zone de liaison (112).

6. Unité électrochimiquement active selon l'une des revendications 1 à 5, **caractérisée en ce que** le joint (104) présente au moins une lèvre d'étanchéité (124) qui forme un composant de la zone de distribution (110) ou un composant de la zone de fixation (108).

7. Unité électrochimiquement active selon l'une des revendications 1 à 6, **caractérisée en ce que** le joint (104) présente au moins un limitateur de déformation (130), qui forme un composant de la zone de distribution (110) ou un composant de la zone de fixation (108).

8. Unité électrochimiquement active selon l'une des revendications 1 à 7, **caractérisée en ce que** la hauteur la plus élevée (H_{V}) de la zone de distribution (110) est d'au moins 1,2 mm.

9. Unité électrochimiquement active selon l'une des revendications 1 à 8, **caractérisée en ce que** la section transversale de la zone de distribution (110) varie le long d'une direction longitudinale (126) de la zone de distribution (110).

10. Unité électrochimiquement active selon l'une des revendications 1 à 9, **caractérisée en ce que** le joint (104) est moulé par injection et **en ce que** le matériau du joint (104) pénètre une partie d'au moins une couche de diffusion gazeuse (102) de l'unité électrochimiquement active (100).
